# EUROPÄISCHE PATENTSCHRIFT

(11) **EP 4 208 693 B1**
(45) Veröffentlichungstag und Bekanntmachung des Hinweises auf die Patenterteilung: **21.08.2024**
(21) Anmeldenummer: 21766689.0
(22) Anmeldetag: 03.09.2021
(51) Int. Cl.: G01D 3/028, G01D 11/00, G01D 21/00

(54) **SENSOR-/AKTOREINHEIT**
SENSOR/ACTUATOR UNIT
UNITÉ DE DÉTECTION/ACTIONNEMENT

(30) Priorität: 04.09.2020 DE 102020211180
(43) Veröffentlichungstag der Anmeldung: 12.07.2023
(73) Patentinhaber: Fraunhofer-Gesellschaft zur Förderung der angewandten Forschung e.V., 80686 München (DE)
(72) Erfinder: RENTZSCH, Hendrik, 09126 Chemnitz (DE); HEYSZL, Johann, 85748 Garching bei München (DE); HRISTOZOV, Stefan, 85748 Garching bei München (DE); KURTH, Robin, 09126 Chemnitz (DE); BURKHARDT, Frank, 91058 Erlangen (DE)
(74) Vertreter: Pfitzner, Hannes
(86) Internationale Anmeldenummer: PCT/EP2021/074388
(87) Internationale Veröffentlichungsnummer: WO 2022/049255

(56) Entgegenhaltungen:
- EP-A2- 0 525 539
- WO-A1-2019/053079
- DE-A1- 102011 003 438
- US-B2- 9 547 300

## Beschreibung

Ausführungsbeispiele der vorliegenden Erfindung beziehen sich auf eine Sensor-/Aktoreinheit für eine mechanische Anlage, insbesondere eine Werkzeugmaschine, wie z. B. eine Blechpresse. Weitere Ausführungsbeispiele beziehen sich auf ein Verfahren zum Betreiben der Sensor-/Aktoreinheit sowie ein entsprechendes Computerprogramm.

Blechpressen oder andere große mechanische Anlagen, wie z. B. Fertigungsroboter, umfassen typischerweise ein Netzwerk an über die Anlage verteilter Sensorik bzw. Aktorik. Sensoren, wie z. B. Drucksensoren oder Temperatursensoren, können beispielsweise elektrisch in die Anlagensteuerung eingebunden sein. Hierbei werden dann Kabelstränge entlang der Anlage geführt.

Die US 9,547,300 B2 bezieht sich auf eine Maschinensteuerung mit einem Sensormodul und einem Auswertemodul. Die DE 10 2011 003 438 A1 bezieht sich auf eine Einrichtung und ein Verfahren zur Ermittlung von Messwerten in einem strömenden Medium. Die WO 2019/053079 A1 bezieht sich auf einen Transceiver mit einem Sensor zur Berechnung einer Positionsinformtaion einer Antenne eines weiteren Transceivers. Darüber hinaus ist auch noch die EP 0525539 A2 als weiterer Stand der Technik zu nennen.

In den letzten Jahren wurde, um den Verkabelungsaufwand zu reduzieren, vermehrt auf Sensoren gesetzt, die drahtlos / per Funk eingebunden sind, das heißt zumindest ihre Sensordaten per Funk übermitteln.

Ein bei stark vibrierenden Maschinen, wie z. B. Pressen, vorkommendes Problem ist, dass durch die Bewegung bzw. die Vibration der Anlage die Elektronik gestört wird. Das hat beispielsweise Einfluss auf Messgenauigkeit und/oder insbesondere die drahtlose Übermittlung. Deshalb besteht der Bedarf nach einem verbesserten Ansatz.

Aufgabe der vorliegenden Erfindung ist es, ein Konzept für eine Sensorik/Aktorik zu schaffen, das robust gegenüber äußerlichen Störungen ist.

Die Aufgabe wird durch den Gegenstand der unabhängigen Patentansprüche gelöst.

Ausführungsbeispiele der vorliegenden Erfindung schaffen eine Sensor-/Aktoreinheit für einen Werkzeughalter, eine mechanische Anlage, insbesondere eine Werkzeugmaschine bzw. allgemein für Anwendungen mit (hoher) dynamischer Belastung, wie Stoßbelastung. Die Sensor-/Aktoreinheit weist ein Sensorelement und/oder eine Aktorelement sowie ein schwingendes Element auf. Das Sensorelement ist ausgebildet, eine physikalische Messgröße, wie z. B. eine Beschleunigung, die auf die Umgebung der Sensor-/Aktoreinheit bzw. das Sensorelement einwirkt, zu messen. Sensor- und Aktorelement können auch kombiniert sein. Das schwingende Element, wie z. B. ein Oszillator, ist mit einer Nachregelung ausgestattet. Die Nachregelung ist ausgebildet, um eine Signal des schwingenden Elements in Abhängigkeit von einer Bewegung der Sensor-/Aktoreinheit zu kompensieren.

Entsprechend Ausführungsbeispielen meint Kompensiere:
- Physikalischen Eingreifen in Sinne von Nachregeln.
- Nachträgliches Korrigieren des (verfälschten) Signals, z.B. mathematisch; oder
- Berücksichtigen der "Verfälschung" im Signal bei der Weiterverarbeitung.

Entsprechend Ausführungsbeispielen umfasst die Sensor-/Aktoreinheit einen Sensor zur Ermittlung der Bewegung der Sensor-/Aktoreinheit oder zur Bestimmung einer Größe, die die Bewegung der Sensor-/Aktoreinheit oder einer aus der Bewegung auf die Sensor-/Aktoreinheit einwirkende Kraft. Hierbei kann es sich beispielsweise um einen Beschleunigungssensor handeln, der die Bewegung bestimmt. Durch die Erfassung der Bewegung mittels des Sensors kann in Abhängigkeit hiervon die Nachregelung erfolgen. Auch wäre es denkbar, dass das Sensor- und Aktorelement kombiniert ist, da viele Aktoren, wie z.B. Piezoaktoren gleichzeitig als Sensor genutzt werden können.

Ausführungsbeispielen der vorliegenden Erfindung liegt die Erkenntnis zugrunde, dass schwingende Elemente, wie z. B. Oszillatoren im Allgemeinen oder Piezokristalle oder Quarzkristalle im Speziellen, durch eine externe Bewegung, wie z. B. eine Beschleunigung oder eine Vibration, gestört werden können, was dann wiederum einen Einfluss auf ein auszugebendes Taktsignal hat. Diese Bewegung lässt sich bestimmen, wobei dann in Abhängigkeit von der Bewegung das Nachregeln erfolgt. Durch die Kombination von Nachregelung und schwingendem Element ist es vorteilhafterweise möglich, häufig bei Sensorelementen implementierte Funktionen, wie z. B. den Funk oder auch die Messung an sich von externen Störeinflüssen zu entkoppeln. Zusätzlich ergibt sich der Vorteil, dass das Sensorelement wesentlich robuster gegenüber externen Einflüssen ist.

Entsprechend Ausführungsbeispielen erfolgt die Nachregelung mittels eines Steuersignals, wie z. B. einer Spannung, das dem schwingenden Element bereitgestellt wird. In diesem Beispiel wäre eine mögliche Implementierung des schwingenden Elements ein Schwingquarz, der z.B. über einen VCO zur Schwingung angeregt wird und so einen präzisen Oszillator formt.

In vorherigen Ausführungsbeispielen wurde erläutert, dass zum Nachregeln ein Steuersignal verwendet wird. Das Steuersignal oder der Wert des Steuersignals ist Abhängigkeit von der Bewegung der Sensor-/Aktoreinheit oder einer auf die Sensor-/Aktoreinheit einwirkenden Kraft. Entsprechend einem weiteren Ausführungsbeispiel kann das Steuersignal bzw. der Wert desselben direkt proportional abhängig zu der Bewegung oder einer aus der Bewegung auf die Sensor-/Aktoreinheit einwirkenden Kraft sein. Bei dem oben erläuterten Ausführungsbeispiel eines VCOs (Voltage Controlled Osciallator) wird als Steuersignal eine Spannung oder eine Gleichspannung verwendet, die dann eben in Abhängigkeit von der Bewegung oder einer aus der Bewegung resultierenden Kraft variiert wird.

Entsprechend Ausführungsbeispielen gibt das schwingende Element ein Signal, wie z.B. ein Taktsignal aus. Entsprechend einem Ausführungsbeispiel umfasst die Sensor-/Aktoreinheit ein Funkelement. Dieses Funkelement kann beispielsweise das schwingende Element als Taktgeber nutzen. Wie oben erläutert, kann durch das Kompensieren das Signal korrigiert werden, entweder durch aktives Nachregeln des schwingenden Elements oder durch nachträgliches mathematisches Korrigieren des bereitgestellten Signals. Hierbei ist es vorteilhaft, dass der Funk nicht durch die Bewegung der Sensor-/Aktoreinheit negativ beeinflusst wird.

Entsprechend Ausführungsbeispielen umfasst das Sensorelement einen Temperatursensor, einen Kraftsensor, einen Vibrationssensor oder einen Ultraschallsensor. Entsprechend weiteren Ausführungsbeispielen kann die Sensor-/Aktoreinheit einen integrierten Aktor, integrierten Piezoaktor oder einen integrierten Ultraschallaktor umfassen.

Ein weiteres Ausführungsbeispiel schafft ein Messsystem für eine Werkzeugmaschine umfassend zumindest zwei Sensor-/Aktoreinheiten sowie einen Funkempfänger, der ausgebildet ist, um Daten von den zumindest zwei Sensor-/Aktoreinheiten zu empfangen.

Ein weiteres Ausführungsbeispiel schafft eine Werkzeugmaschine mit einem Messsystem, wie eben erläutert bzw. zumindest einer Sensor-/Aktoreinheit. Die Sensor-/Aktoreinheit kann z.B. in einen Werkzeughalter, wie z.B. für ein Umformwerkzeug integriert sein.

Ein weiteres Ausführungsbeispiel schafft ein Verfahren zum Betreiben einer Sensor-/Aktoreinheitfür eine Werkzeugmaschine, wobei die Sensor-/Aktoreinheit einen optionalen Eingriffnahmeabschnitt aufweist, der ausgebildet ist, um eine Verbindung zu einem Werkzeug der Werkzeugmaschine auszubilden und wobei die Sensor-/Aktoreinheit ein Sensorelement und/oder Aktorelement aufweist, mit folgenden Schritten: Erzeugen mittels eines schwingenden Elements einer Schwingung; und Kompensieren eines Signals des schwingenden Elements in Abhängigkeit von einer Bewegung der Sensor-/Aktoreinheit.

Das Verfahren kann selbstverständlich computerimplementiert sein.

Entsprechend weiteren Ausführungsbeispielen kann anstelle des Sensorsignals zur Bestimmung der physikalischen Größe auch eine modellbasierte Berechnung erfolgen. Deshalb beziehen sich weitere Ausführungsbeispiele auf eine Werkzeugmaschine oder einen Werkzeughalter (mit einem digitalen Zwilling), der eine Berechnungseinheit aufweist, die ausgebildet ist, eine physikalische Größe, die auf die Sensor/-Aktoreinheit einwirkt, auf Basis eines digitalen Modells zu berechnen, wobei die physikalische Größe einen Rückschluss auf die Bewegung der Sensor-/Aktoreinheit oder eine aus der Bewegung auf die Sensor-/Aktoreinheit einwirkende Kraft zulässt.

Weitere Details sind in den Unteransprüchen definiert. Ausführungsbeispiele der vorliegenden Erfindung werden anhand der beiliegenden Zeichnungen erläutert. Es zeigen:
- Fig. 1: eine schematische Darstellung einer Werkzeugmaschine mit einer Sensor-/Aktoreinheit gemäß einem Basisausführungsbeispiel; und
- Fig. 2: eine schematische Darstellung einer Sensor-/Aktoreinheit gemäß einem erweiterten Ausführungsbeispiel.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

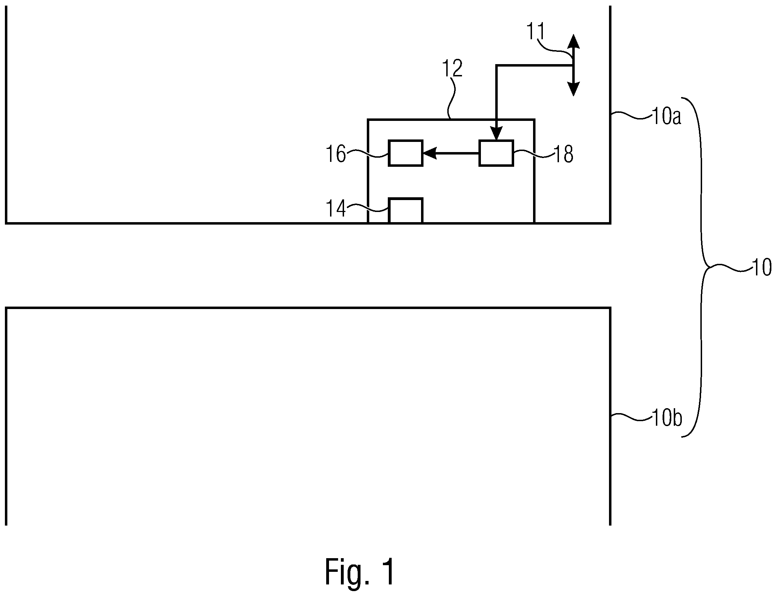

Fig. 1 zeigt eine Werkzeugmaschine 10, hier eine Presse mit zwei Pressformen 10a und 10b. Im Bereich der Pressformen 10a (Werkzeug) ist unter Zuhilfenahme eines optionalen Eingriffnahmeabschnitts (nicht dargestellt) eine Sensoreinheit 12 bzw. eine Sensor-/Aktoreinheit angeordnet. Diese Einheit 12 umfasst in einer Sensorkonfiguration ein Sensorelement 14 sowie ein schwingendes Element 16. Das Werkzeug 10a bewegt sich beispielsweise auf und ab, wie anhand des Pfeils 11 illustriert ist.

Durch die Bewegung des Werkzeugs 10a wird natürlich auch die Sensor-/Aktoreinheit 12 bewegt. Gerade bei schnellen oder stoßartigen Bewegungen kommt es dann auch zu Erschütterungen der Sensor-/Aktoreinheit 12 und deren Komponenten 14 und 16. Insbesondere das schwingende Element, wie z. B. ein Piezokristall eines Oszillators, wird durch die Bewegung oder eine stoßartige Bewegung 11 und insbesondere durch stoßartige Bewegungen beeinflusst. Hierdurch kann es dazu kommen, dass die elektrische Schwingung des schwingenden Elements ebenfalls beeinflusst wird. Beispielsweise kann das, wenn man von einem Oszillator ausgeht, abgegebene Oszillationssignal eine veränderte Frequenz aufweisen. Diese Frequenzstörung ist abhängig von der Bewegung 11.

Ausgehend von dieser Erkenntnis ist nun mittels einer Nachregelung 18 das schwingende Element nachzuregeln bzw., allgemein formuliert, des von dem schwingende Element generierte Signal zu kompensieren, z.B. mathematisch nachträglich zu kompensieren. Die Nachregelung erfolgt in Abhängigkeit von der Bewegung 11. Deshalb erhält oder generiert die Nachregelung 18 eine Information über die Bewegung 11 und führt die Nachregelung/Kompensation entsprechend durch.

Wenn man davon ausgeht, dass es sich bei dem schwingenden Element um einen Schwingquarz eines präzisen Oszillators handelt, kann mittels eines VCOs (Voltage Controlled Oscillator, spannungsgesteuerter Oszillator) die Frequenz angepasst werden, indem die Nachregelung 18 ein entsprechendes Steuersignal bzw. eine Steuerspannung ausgibt. Dieses Steuersignal bzw. die Steuerspannung wird in Abhängigkeit von der Bewegung 11 gewählt. Alternativ kann eine nachträgliche Korrektur des "verfälschten" Signals oder Berücksichtigung der ermittelten "Verfälschung" bei der Weiterverwendung des Signals erfolgen.

Bezüglich des Sensors 14 sei angemerkt, dass dieser bevorzugterweise eine physikalische Messgröße im Zusammenhang mit der Werkzeugmaschine 10 misst. Hierbei kann es sich beispielsweise um einen Druck, hier ein Druck im Bereich der Presse bzw. Pressform 10a, handeln. Alternativ wäre es auch denkbar, dass ein Temperatursensor, ein Kraftsensor, ein Vibrationssensor oder ein Ultraschallsensor integriert ist. Über den Vibrationssensor oder den Kraftsensor wäre es dann beispielsweise auch möglich, die Bewegung 11 zu überwachen, so dass mittels des Nachreglers 18 eine Nachregelung erfolgen kann. Selbstverständlich ist es entsprechen weiteren Ausführungsbeispielen auch möglich, dass ein oder mehrere Sensoren als Sensorik 14 vorgesehen sind.

Alternativ zu dem Sensor wäre es auch denkbar, dass statt dem Sensor oder additiv zu dem Sensor 14 ein Aktor, wie z.B. ein Ultraschallaktor verwendet wird. Insbesondere bei Abstandssensor auf Ultraschallbasis kommt typischerweise eine Aktor/Sensorkombination (auf Piezobasis) zum Einsatz. Der Aktor kann anstelle oder additive zu dem Sensor 14 platziert sein.

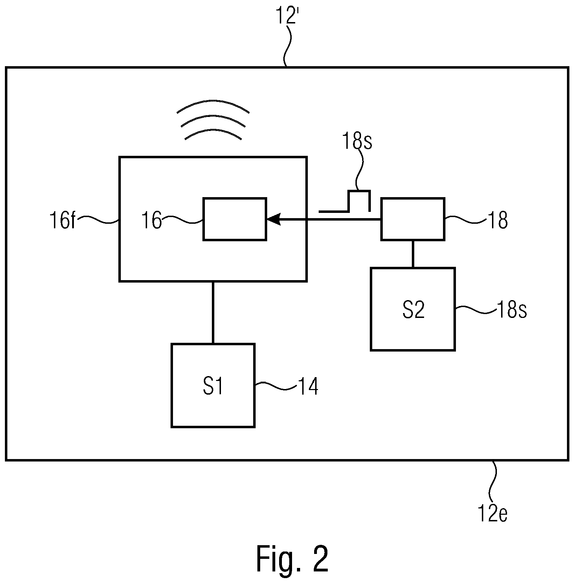

Bezugnehmend auf Fig. 2 wird eine erweiterte Variante der Sensor-/Aktoreinheit 12, hier 12', erläutert.

Die Sensor-/Aktoreinheit 12' umfasst als elektronische Komponenten einen ersten Sensor 14, einen Funktransceiver 16f, der in diesem Ausführungsbeispiel das schwingende Element 16 beinhaltet bzw. nutzt, sowie die Nachregelung 18 inkl. einem optionalen Sensor 18s. Optional ist hier ein Bewegungssensor 18s als Teil der Nachregelung 18 vorgesehen.

Darüber hinaus umfasst die Sensor-/Aktoreinheit 12' einen Eingriffnahmeabschnitt 12e, hier die Unterseite des Gehäuses der Sensor-/Aktoreinheit 12'.

Der Transceiver 16f ist ausgebildet, um die mittels des Sensors 14 (z. B. Temperatursensor) ermittelten Sensorwerte nach extern zu übermitteln. Hierzu wird ein hochgenauer Oszillator auf Basis eines Schwingkristalls 16 verwendet. An dieser Stelle sei angemerkt, dass selbstverständlich auch das Taktsignal des Elements 16 alternativ oder additiv für einen Prozessor oder die Sensorik 14 oder eine andere Einheit verwendet werden kann.

Dieser Schwingkristall 16 wird mittels des Nachreglers 18 nachgeregelt, wobei als Steuergröße für die Nachregelung ein die Bewegung beschreibendes Sensorsignal des Sensors 18s verwendet wird.

Alternativ zu dem Extrasensor 18s wäre es auch möglich, dass der Sensor 14 als Bewegungssensor oder Beschleunigungssensor verwendet wird und die Nachregelung 18 den Sensorwert (abhängig von der physikalischen Messgröße) dieses Sensors 14 verwendet.

Entsprechend einem Ausführungsbeispiel kann statt dem oben als separaten Elements beschriebenen Sensorelement 14 bzw. 18s auch ein integriertes Sensorelement, z.B. ein in das schwingende Element 16 integriertes Sensorelement zum Einsatz kommen. Mit diesem integrierten Sensorelement 16 kann z.B. zur Nachregelung (vgl. 18) die Bewegung 11 detektiert werden. Dieses Selbstsensierungsprinzip ist beispielsweise bei Piezos als schwingende Elemente möglich.

Auch wenn es nicht dargestellt ist, sei an dieser Stelle angemerkt, dass bei der Sensoreinheit 12' selbstverständlich auch weitere Komponenten, wie z. B. eine Batterie zur Stromversorgung oder ein Energy Harvester vorgesehen sein können.

Das dahinterstehende Verfahren beim Kompensieren bzw., im Speziellen beim Nachregeln, kann beispielsweise wie folgt gestaltet sein: Entsprechend Ausführungsbeispiel erfolgt keine Nachregelung mittels der Einheit 18, wenn durch den Sensor 18s erkannt wird, dass keine oder nur eine unwesentliche Bewegung vorliegt. Sobald eine Bewegung vorliegt, die eine Störung verursachen kann, erfolgt dann eine entsprechende Nachregelung. Hierzu wird ein Steuersignal von der Nachregelung 18 an das schwingende Element 16 bzw. die elektronische Schaltung, die das schwingende Element 16 nutz, ausgegeben. Dieser Ansatz stellt eine Hardware-Nachregelung dar, wobei mit dem Steuersignal einen direkter oder indirekter Einfluss auf die mittels des schwingenden Elements 16 erzeugt Frequenz ausgeübt wird. Ein Beispiel für einen direkten Einfluss wäre das Erzeugen einer Gegenschwingung, mit der z.B. das schwingende Element verstimmt wird. Ein weiterer Ansatz für eine Kompensation wäre auch eine nachträglich Korrektur des schwingenden Signals.

Alternativ hierzu kann die Kompensation mathematisch erfolgen. Wenn man von einem Transceiver als elektronische Komponente, die das schwingende Element 16 nutzt, ausgeht, kann bei der digitalen Erzeugung des Funksignals, der verstimmte Zustand des schwingende Elements 16 mit berücksichtigt werden. Insofern erfolgt eine Nachregelung derart, dass das Signal, welches mit dem schwingenden Element 16 erzeugt wird, vorverzerrt wird.

Die Nachregelung bei obigen Ausführungsbeispielen kann sich beispielsweise wie folgt gestalten:
Beispielsweise wird die Resonanzfrequenz eines VCOs wird durch die frequenzbestimmenden Elemente, unter anderem sind das Kondensatoren, dieser Schaltung festgelegt. Klassisch kommt hierbei eine Kapazitätsdiode zum Einsatz, Dies ist ein Element dessen Kapazität sich über die Wahl seiner Vorspannung variieren lässt. Hierüber lässt sich die Resonanzfrequenz der Schaltung einstellen. Dasselbe Prinzip der Resonanzfrequenzabstimmung über Kapazitätsdioden findet auch bei einem VCXO (Voltage Controlled Crystal Oscillator) Anwendung.

Ein weiteres Ausführungsbeispiel bezieht sich auf ein Messsystem mit einer Sensoreinheit 12', die per Funk (vgl. Transceiver 16f) die Sensorwerte an einen Empfänger sendet. Bei obigen Ausführungsbeispielen, kann die Sensor/Aktoreinheit 12 einen Eingriffnahmeabschnitt (Schraubverbindung, Klemmverbindung, Standfuß) aufweisen, über welchen die Sensor/Aktoreinheit 12 mit der Anlage, z.B. mit einem Werkzeug der Werkzeugmaschine, verbunden werden kann.

Auch wenn bei oben genannten Ausführungsbeispielen immer von Werkzeugmaschine ausgegangen wurde, sei angemerkt, dass auch weitere Anwendungen im Zusammenhang mit anderen (mechanischen) Anlagen bzw. allgemein für Anwendungen mit (hoher) dynamischer Belastung, wie Stoßbelastung denkbar sind. Beispiele sind Sensor-/Aktoranwendungen bei Motoren, Produktionsanlage, Robotern, usw.

Ein weiteres Ausführungsbeispiel für eine Werkzeugmaschine ist eine Umformmaschine, wie z. B. eine Presse, bei welcher hohe Stoßbelastungen auftauchen. Derartige Maschinen haben immer den Bedarf an Sensorik, wie z. B. einer Drucksensorik im Bereich des Umformwerkzeugs.

Gemäß weiteren Ausführungsbeispielen kann statt der direkten Messung der physikalischen Größe auch eine Modellierung der physikalischen Größe erfolgen. Dies erfolgt entsprechend Ausführungsbeispielen anhand eines digitalen Zwillings, der den Ist-Zustand der Maschine, z. B. der Werkzeugmaschine, nachstellt. Hierfür kann beispielsweise eine Eingangsgröße in Form eines Steuerparameters für die Bewegung der Werkzeugmaschine oder auch ein gemessener Parameter wie z. B. mittels einer optischen Messung verwendet werden. Wenn man beispielsweise von einem Presswerkzeug ausgeht, kann anhand des digitalen Zwillings unter Verwendung der Ansteuerparameter der Presse modelliert werden, welche aktuellen Bewegungen vorliegen und welche Beschleunigungen daraus resultieren. Dieses digitale Modell wird entsprechend weiteren Ausführungsbeispielen mittels KI bestimmt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Werkzeugmaschine (10) oder Werkzeughalter mit zumindest einer Sensor-/Aktoreinheit (12, 12'), wobei die Sensor-/Aktoreinheit (12, 12') folgende Merkmale aufweist:
ein Sensorelement (14), das ausgebildet ist, eine physikalische Messgröße, die auf die Sensor-/Aktoreinheit (12, 12') einwirkt, zu messen; oder Sensorelement (14), das ausgebildet ist, eine physikalische Messgröße, die auf die Sensor-/Aktoreinheit (12, 12') einwirkt, zu messen in Kombination mit einem Aktorelement (14); wobei die physikalische Messgröße, gemessen durch das Sensorelement (14), einen Rückschluss auf eine Bewegung (11) der Sensor-/Aktoreinheit (12, 12')oder auf eine aus der Bewegung (11) auf die Sensor-/Aktoreinheit (12, 12`)einwirkenden Kraft zulässt;
wobei das Sensorelement (14) einen Kraftsensor, einen Beschleunigungssensor, einen Drucksensor, einen Vibrationssensor, einen Ultraschallsensor und/oder einen optischen Sensor umfasst;
ein Funkelement (16f), das ausgebildet ist, um einen ermittelten Sensorwert des Sensorelements (14) drahtlos zu übermitteln;
ein schwingendes Element (16) mit einer Nachregelung (18), wobei das Funkelement (16f) ein Taktsignal von dem schwingenden Element erhält, wobei die Nachregelung (18) ausgebildet ist, um das Taktsignal des schwingenden Elements (16) in Abhängigkeit von der Bewegung (11) der Sensor-/Aktoreinheit (12, 12') zu kompensieren.

2. Werkzeugmaschine (10) oder Werkzeughalter gemäß Anspruch 1, wobei die Nachregelung (18) ausgebildet ist, um beim Kompensieren das schwingende Element nachzuregeln; oder um beim Kompensieren das Signal des schwingenden Elements (16) zu korrigieren oder korrigiert weiterzuverarbeiten; und/oder.
wobei die Nachregelung (18) ausgebildet ist, ein Steuersignal (18s) dem schwingenden Element bereitzustellen, um das schwingende Element nachzuregeln; oder wobei die Nachregelung (18) ausgebildet ist, ein Steuersignal (18s) dem schwingenden Element bereitzustellen, um das schwingende Element nachzuregeln, wobei das Steuersignal (18s) oder ein Wert des Steuersignals (18s) abhängig ist von der Bewegung (11) der Sensoreinheit (12, 12') oder einer aus der Bewegung (11) auf die Sensoreinheit (12, 12') einwirkenden Kraft; oder
wobei die Nachregelung (18) ausgebildet ist, ein Steuersignal (18s) dem schwingenden Element bereitzustellen, um das schwingende Element nachzuregeln, wobei das Steuersignal (18s) oder ein Wert des Steuersignals (18s) direkt proportional abhängig ist von der Bewegung (11) der Sensoreinheit (12, 12') oder einer aus der Bewegung (11) auf die Sensoreinheit (12, 12') einwirkenden Kraft, und/oder
wobei die Nachregelung (18) ausgebildet ist, eine Spannung oder Gleichspannung als das Steuersignal (18s) bereitzustellen.

3. Werkzeugmaschine (10) oder Werkzeughalter gemäß einem der vorherigen Ansprüche, wobei das schwingende Element einen Piezokristall oder Quarzkristall umfasst.

4. Werkzeugmaschine (10) oder Werkzeughalter gemäß einem der vorherigen Ansprüche, wobei die Sensoreinheit (12, 12') einen Sensor (18s) zur Ermittlung der Bewegung (11) der Sensoreinheit (12, 12') oder zur Bestimmung einer Größe, die die Bewegung (11) der Sensoreinheit (12, 12') oder einer aus der Bewegung (11) auf die Sensoreinheit (12, 12') einwirkenden Kraft, umfasst.

5. Werkzeugmaschine (10) oder Werkzeughalter gemäß einem der vorherigen Ansprüche, wobei die Sensoreinheit (12, 12') einen integrierten Aktor, integrierten Piezoaktor und/oder einen integrierten Ultraschallaktor umfasst.

6. Werkzeugmaschine (10) oder Werkzeughalter gemäß einem der vorherigen Ansprüche mit zumindest zwei Sensor-/Aktoreinheiten (12, 12') sowie einen Funkempfänger, der ausgebildet ist, um Daten von den zumindest zwei Sensor-/Aktoreinheiten (12, 12') zu empfangen.

7. Werkzeugmaschine gemäß einem der vorherigen Ansprüche, wobei die Werkzeugmaschine eine Pressmaschine oder Umformmaschine umfasst; und/oder wobei die Werkzeugmaschine eine Pressmaschine oder Umformmaschine umfasst und wobei die Sensor-/oder Aktoreinheit (12, 12') an dem Umformwerkzeug befestigt ist.

8. Verfahren zum Betreiben einer Sensor-/Aktoreinheit (12, 12') bei einer Werkzeugmaschine (10) oder Werkzeughalter gemäß einem der vorherigen Ansprüche, mit folgenden Schritten:
Erzeugen mittels eines schwingenden Elements einer Schwingung; und
Kompensieren eines Signals des schwingenden Elements in Abhängigkeit von der Bewegung (11) der Sensor-/Aktoreinheit (12, 12').

9. Verfahren nach Anspruch 8, wobei das Kompensieren ein Nachregeln des schwingenden Elements aufweist oder wobei das Kompensieren ein Korrigieren oder korrigiertes Weiterverarbeiten aufweist.

10. Computerprogramm zum Durchführen des Verfahrens nach Anspruch 8 oder 9.

11. Werkzeugmaschine (10) oder Werkzeughalter mit zumindest einer Sensor-/Aktoreinheit (12, 12'), wobei die Sensor-/Aktoreinheit (12, 12') folgende Merkmale aufweist:
Eine Berechnungseinheit (14), die ausgebildet ist, eine physikalische Größe, die auf die Sensor-/Aktoreinheit (12, 12') einwirkt, auf Basis eines digitalen Models zu berechnen; wobei die physikalische Größe einen Rückschluss auf eine Bewegung (11) der Sensor-/Aktoreinheit (12, 12') oder auf eine aus der Bewegung (11) auf die Sensor-/Aktoreinheit (12, 12') einwirkenden Kraft zulässt;
ein Funkelement (16f), das ausgebildet ist, um einen ermittelten Sensorwert des Sensorelements (14) drahtlos zu übermitteln;
ein schwingendes Element (16) mit einer Nachregelung (18), wobei das Funkelement (16f) ein Taktsignal von dem schwingenden Element erhält, wobei die Nachregelung (18) ausgebildet ist, um das Taktsignal des schwingenden Elements (16) in Abhängigkeit von der Bewegung (11) der Sensor-/Aktoreinheit (12, 12') zu kompensieren.

12. Werkzeugmaschine (10) oder Werkzeughalter gemäß Anspruch 11, wobei das digitale Modell auf einem digitalen Zwilling der Werkzeugmaschine oder des Werkzeughalters basiert.

13. Werkzeugmaschine (10) oder Werkzeughalter gemäß Anspruch 11 oder 12, wobei eine optische Messung oder ein Bewegungsparameter oder ein Ansteuerparameter für die Werkzeugmaschine oder den Werkzeughaltern als Eingangsgröße für das digitale Modell dient.

14. Verfahren zum Betreiben einer Sensor-/Aktoreinheit (12, 12') bei einer Werkzeugmaschine (10) oder Werkzeughalter gemäß einem der Ansprüche 11 bis 13, wobei das Verfahren den Schritt des Bestimmens einer physikalischen Größe auf Basis eines digitalen Modells aufweist.

15. Computerprogramm zum Durchführen des Verfahrens nach Anspruch 14.

## Claims

1. Tool machine (10) or tool holder with at least one sensor/actuator unit (12, 12'), the sensor/actuator unit (12, 12') comprising:
a sensor element (14) configured to measure a physical measured quantity acting on the sensor/actuator unit (12, 12'); or sensor element (14) configured to measure a physical measured quantity acting on the sensor/actuator unit (12, 12') in combination with an actuator element (14); wherein the physical measured quantity, measured by the sensor element (14), allows conclusions on a movement (11) of the sensor/actuator unit (12, 12') or a force acting on the sensor/actuator (12, 12') unit from the movement (11);
wherein the sensor element (14) comprises a force sensor, an acceleration sensor, a pressure sensor, a vibration sensor, an ultrasound sensor, and/or an optical sensor;
a radio element (16f) configured to transfer a determined sensor value of the sensor element (14) in a wireless manner;
a vibrating element (16) comprising a readjustment (18), wherein the radio element (16f) receives a clock signal from the vibrating element, wherein the readjustment (18) is configured to compensate the clock signal of the vibrating element (16) in dependence on the movement (11) of the sensor/actuator unit (12, 12').

2. Tool machine (10) or tool holder according to claim 1, wherein the readjustment (18) is configured to readjust the vibrating element during compensation; or to correct the signal of the vibrating element (16) or to process the same further in a corrected manner during compensation; and or
wherein the readjustment (18) is configured to provide a control signal (18s) to the vibrating element to readjust the vibrating element; or
wherein the readjustment (18) is configured to provide a control signal (18s) to the vibrating element to readjust the vibrating element, wherein the control signal (18s) or a value of the control signal (18s) depends on the movement (11) of the sensor unit (12, 12') or a force acting on the sensor unit (12, 12') from the movement (11); or
wherein the readjustment (18) is configured to provide a control signal (18s) to the vibrating element to readjust the vibrating element, wherein the control signal (18s) or a value of the control signal (18s) depends in a direct proportional manner on the movement (11) of the sensor unit (12, 12') or a force acting on the sensor unit (12, 12') from the movement (11), and/or
wherein the readjustment (18) is configured to provide a voltage or direct voltage as the control signal (18s).

3. Tool machine (10) or tool holder according to one of the preceding claims, wherein the vibrating element comprises a piezo crystal or quartz crystal.

4. Tool machine (10) or tool holder according to one of the preceding claims, wherein the sensor unit (12, 12') comprises a sensor (18s) for determining the movement (11) of the sensor unit (12, 12') or for determining a quantity describing the movement (11) of the sensor unit (12, 12') or a force acting on the sensor unit (12, 12') from the movement (11).

5. Tool machine (10) or tool holder according to one of the preceding claims, wherein the sensor unit (12, 12') comprises an integrated actuator, integrated piezo actuator and/or an integrated ultrasound actuator.

6. Tool machine (10) or tool holder according to one of the preceding claims with at least two sensor/actuator units (12, 12') as well as a radio receiver that is configured to receive data from the at least two sensor/actuator units (12, 12').

7. Tool machine according to one of the preceding claims, wherein the tool machine comprises a press machine or a forming machine; and/or
wherein the tool machine comprises a press machine or forming machine and wherein the sensor/or actuator unit (12, 12') is mounted on the forming tool.

8. Method for operating a sensor/actuator unit (12, 12') in a tool machine (10) or a tool holder according to any of the preceding claims, comprising:
generating a vibration by means of a vibrating element; and
compensating a signal of the vibrating element in dependence on the movement (11) of the sensor/actuator unit (12, 12').

9. Method according to claim 8, wherein compensating comprises readjusting the vibrating element or wherein compensating comprises correcting or corrected further processing.

10. Computer program for performing the method according to claim 8 or 9.

11. Tool machine (10) or tool holder with at least one sensor/actuator unit (12, 12'), the sensor/actuator unit (12, 12') comprising:
a calculating unit (14) configured to calculate a physical quantity acting on the sensor/actuator unit (12, 12') based on a digital model; wherein the physical quantity allows conclusions on a movement (11) of the sensor/actuator unit (12, 12') or a force acting on the sensor/actuator unit (12, 12') from the movement (11);
a radio element (16f) configured to transfer a determined sensor value of the sensor element (14) in a wireless manner;
a vibrating element (16) comprising a readjustment (18), wherein the radio element (16f) receives a clock signal from the vibrating element, wherein the readjustment (18) is configured to compensate the clock signal of the vibrating element (16) in dependence on the movement (11) of the sensor/actuator unit (12, 12').

12. Tool machine (10) or tool holder according to claim 11, wherein the digital model is based on a digital twin of the tool machine or the tool holder.

13. Tool machine (10) or tool holder according to claim 11 or 12, wherein an optical measurement, or a movement parameter, or a control parameter for the tool machine or the tool holder serves as input quantity for the digital model.

14. Method for operating a sensor/actuator unit (12, 12') in a tool machine (10) or tool holder according to one of claims 11 to 13, wherein the method comprises determining a physical quantity based on a digital model.

15. Computer program for performing the method according to claim 14.

## Revendications

1. Machine-outil (10) ou porte-outil avec au moins une unité de capteur/d'actionneur (12, 12'), dans lesquels l'unité de capteur/ d'actionneur (12, 12') présente les caractéristiques suivantes:
un élément capteur (14) qui est conçu pour mesurer une grandeur de mesure physique qui agit sur l'unité de capteur/d'actionneur (12, 12'); ou un élément capteur (14) qui est conçu pour mesurer une grandeur de mesure physique qui agit sur l'unité de capteur/d'actionneur (12, 12') en combinaison avec un élément actionneur (14); où la grandeur de mesure physique, mesurée par l'élément capteur (14), permet une conclusion sur un mouvement (11) de l'unité de capteur/d'actionneur (12, 12') ou sur une force agissant à partir du mouvement (11) sur l'unité de capteur/ d'actionneur (12, 12');
dans lesquels l'élément capteur (14) comporte un capteur de force, un capteur d'accélération, un capteur de pression, un capteur de vibration, un capteur d'ultrasons et/ou un capteur optique;
un élément radioélectrique (16f) qui est conçu pour transmettre sans fil une valeur de capteur déterminée de l'élément capteur (14);
un élément oscillant (16) avec un réajustement (18), où l'élément radioélectrique (16f) obtient un signal d'horloge de l'élément oscillant, où le réajustement (18) est conçu pour compenser le signal d'horloge de l'élément oscillant (16) en fonction du mouvement (11) de l'unité de capteur/d'actionneur (12, 12').

2. Machine-outil (10) ou porte-outil selon la revendication 1, dans lesquels le réajustement (18) est conçu pour réajuster l'élément oscillant lors de la compensation; ou pour corriger le signal de l'élément oscillant (16) lors de la compensation ou pour traiter davantage le signal corrigé; et/ou
dans lequel le réajustement (18) est conçu pour fournir un signal de commande (18s) à l'élément oscillant pour réajuster l'élément oscillant; ou
dans lequel le réajustement (18) est conçu pour fournir un signal de commande (18s) à l'élément oscillant pour réajuster l'élément oscillant, dans lequel le signal de commande (18s) ou une valeur du signal de commande (18s) est fonction du mouvement (11) de l'unité de capteur (12, 12') ou d'une force agissant à partir du mouvement (11) sur l'unité de capteur (12, 12'); ou
dans lequel le réajustement (18) est conçu pour fournir un signal de commande (18s) à l'élément oscillant pour réajuster l'élément oscillant, dans lequel le signal de commande (18s) ou une valeur du signal de commande (18s) est fonction de manière directement proportionnelle du mouvement (11) de l'unité de capteur (12, 12') ou d'une force agissant à partir du mouvement (11) sur l'unité de capteur (12, 12'), et/ou
dans lequel le réajustement (18) est conçu pour fournir une tension ou une tension continue comme signal de commande (18s).

3. Machine-outil (10) ou porte-outil selon l'une des revendications précédentes, dans lesquels l'élément oscillant comporte un cristal piézo-électrique ou un cristal de quartz.

4. Machine-outil (10) ou porte-outil selon l'une des revendications précédentes, dans lesquels l'unité de capteur (12, 12') comporte un capteur (18s) destiné à déterminer le mouvement (11) de l'unité de capteur (12, 12') ou à déterminer une grandeur qui indique le mouvement (11) de l'unité de capteur (12, 12') ou une force agissant à partir du mouvement (11) sur l'unité de capteur (12, 12').

5. Machine-outil (10) ou porte-outil selon l'une des revendications précédentes, dans lesquels l'unité de capteur (12, 12') comporte un actionneur intégré, un actionneur piézoélectrique intégré et/ou un actionneur ultrasonique intégré.

6. Machine-outil (10) ou porte-outil selon l'une des revendications précédentes avec au moins deux unités de capteur/d'actionneur (12, 12') ainsi qu'un récepteur radio qui est conçu pour recevoir des données des au moins deux unités de capteur/d'actionneur (12, 12').

7. Machine-outil selon l'une des revendications précédentes, dans laquelle la machine-outil comporte une machine à presser ou une machine de formage; et/ou
dans laquelle la machine-outil comporte une machine à presser ou une machine de formage et dans laquelle l'unité de capteur/ou d'actionneur (12, 12') est fixée à l'outil de formage.

8. Procédé pour faire fonctionner une unité de capteur/d'actionneur (12, 12') dans une machine-outil (10) ou un porte-outil selon l'une des revendications précédentes, aux étapes suivantes consistant à:
générer une vibration au moyen d'un élément vibrant; et
compenser un signal de l'élément oscillant en fonction du mouvement (11) de l'unité de capteur/d'actionneur (12, 12').

9. Procédé selon la revendication 8, dans lequel la compensation présente un réajustement de l'élément oscillant ou dans lequel la compensation présente une correction ou un traitement ultérieur corrigé.

10. Programme informatique pour mettre en oeuvre le procédé selon la revendication 8 ou 9.

11. Machine-outil (10) ou porte-outil avec au moins une unité de capteur/d'actionneur (12, 12'), dans lesquels l'unité de capteur/ d'actionneur (12, 12') présente les caractéristiques suivantes:
une unité de calcul (14) qui est conçue pour calculer une grandeur physique qui agit sur l'unité de capteur/d'actionneur (12, 12') sur base d'un modèle numérique; où la grandeur physique permet une conclusion relative à un mouvement (11) de l'unité de capteur/d'actionneur (12, 12') ou à une force agissant à partir du mouvement (11) sur l'unité de capteur/d'actionneur (12, 12');
un élément radioélectrique (16f) qui est conçu pour transmettre sans fil une valeur de capteur déterminée de l'élément capteur (14);
un élément oscillant (16) avec un réajustement (18), où l'élément radioélectrique (16f) reçoit un signal d'horloge de l'élément oscillant, où le réajustement (18) est conçu pour compenser le signal d'horloge de l'élément oscillant (16) en fonction du mouvement (11) de l'unité de capteur/d'actionneur (12, 12').

12. Machine-outil (10) ou porte-outil selon la revendication 11, dans lesquels le modèle numérique est basé sur un jumeau numérique de la machine-outil ou du porte-outil.

13. Machine-outil (10) ou porte-outil selon la revendication 11 ou 12, dans lesquels une mesure optique ou un paramètre de mouvement ou un paramètre de commande de la machine-outil ou du porte-outil sert de grandeur d'entrée pour le modèle numérique.

14. Procédé pour faire fonctionner une unité de capteur/d'actionneur (12, 12') dans une machine-outil (10) ou un porte-outil selon l'une des revendications 11 à 13, dans lequel le procédé présente l'étape consistant à déterminer une grandeur physique sur base d'un modèle numérique.

15. Programme informatique pour mettre en oeuvre le procédé selon la revendication 14.
